## Europäisches Patentamt

## European Patent Office

## Office européen des brevets

(11) Publication number: **0 106 065 B1**

(12) **EUROPEAN PATENT SPECIFICATION**

(45) Date of publication of patent specification: **01.07.87**

(51) Int. Cl.⁴: **G 11 B 17/032**

(21) Application number: **83108129.4**

(22) Date of filing: **17.08.83**

(54) **Manually operated cartridge holder.**

(30) Priority: **08.10.82 US 433484**

(43) Date of publication of application:
**25.04.84 Bulletin 84/17**

(45) Publication of the grant of the patent:
**01.07.87 Bulletin 87/27**

(84) Designated Contracting States:
**DE FR GB**

(56) References cited:
**DE-A-3 136 097**
**US-A-3 623 678**
**US-A-3 635 424**
**US-A-3 849 799**
**US-A-3 870 247**
**US-A-3 902 193**

(73) Proprietor: **International Business Machines
Corporation
Old Orchard Road
Armonk, N.Y. 10504 (US)**

(72) Inventor: **Godsoe, Robert James
11225 E. Prince Road
Tucson Arizona 85715 (US)**

(74) Representative: **Ekström, Gösta E.
IBM Svenska AB Intellectual Property
Department Box 962
S-181 09 Lidingö (SE)**

Courier Press, Leamington Spa, England.

## Description

The invention relates to receivers for tape cartridges.

Various receivers for tape cartridges are known in the art. Several U.S. patents are briefly discussed below which illustrate several of these cartridge receivers. US—A—3,870,247 discloses a cassette handling system having a pivotable handler with two fixed pivots at a front portion of a frame or casing. A sliding pivot further couples one of the fixed pivots to a cassette receiver. The cartridge receiver employs ramps and stop elements to guide and hold the casette in position. Moreover, this cassette receiver includes a sensor for indicating when no cassette is present in the receiver or when the cover is in a cassette loading position. Another double-pivoted cartridge receiver is described in US—A—3,849,799.

US—A—3,635,424 discloses a single pivoted receiver for a tape cartridge. The receiver pivots into an operating position for engaging the drive with a reel which is present within the cartridge.

DE—A—3 136 097 discloses a cassette loading and unloading mechanism for a recording and reproducing apparatus. The apparatus includes a chassis assembly and a cassette holder pivotally mounted on the assembly and adapted to partially receive a cassette and to be pivoted around an axis at its front end between a first loading position and a second operative position.

The previous cartridge receiver arrangements share a common problem of requiring a generous amount of vertical space in which to load the receiver with a cartridge. This need for vertical space is often unacceptable in tape units seeking to minimize size and space requirements.

The invention is set out in claims 1 and 2.

Claims 3—12 contain preferable embodiments of both the alternatives set out in claims 1 and 2.

Once the cartridge receiver is in the operating position a latch may be coupled to a catch to hold the receiver in the operating position. An air dash pot may also be provided to soften the transition of the tray from the operating position to the receiving position.

The tray may have a central aperture for receiving a tape drive member which is provided to engage a reel contained within the cartridge when the receiver is in an operating position.

The cover of the cartridge receiver also may have a plunger attached for holding the received cartridge against the tape drive when the tray is in an operating position.

In order to properly seat the cartridge in the receiver, guide rails and a bridge may be integrally formed in the tray. These guide rails also keep the cartridge from contacting the drive clutch which extends through the central aperture. Alignment pins attached to the frame may serve to align the cartridge when the tray is in an operating position because these pins are received by associated slots located in the cartridge.

A cartridge present sensor, file protect sensor and a latch sensor may also be provided with the cartridge receiver mechanism of the present invention. Furthermore, a leader block slot in the tray allows for tape to move in and out of the tray. A leader block step and a leader block ramp in the tray may serve to guide the leader block back into the cartridge when the tape is rewound.

The cartridge receiver of the present invention can be manually front loaded. Unloading can be with machine release. The dual pivot arrangement accompanied by the intermediate pivot pins minimizes the vertical space required to receive a cartridge and thus is acceptable for tape units seeking to minimize size and space requirements.

Data cartridge holders in accordance with the invention, are described in detail below with reference to the attached drawings, which illustrate only two specific embodiments, in which

Fig. 1 is a top view of the tray of the cartridge receiver of the present invention.

Fig. 2 is a side view of the cartridge receiver of the present invention.

Fig. 3 is a side view of the cartridge receiver of the present invention with a different arrangement of the pivot pins and slots than shown in Fig. 2.

The manual loading cartridge receiver includes a tray 10 pivoted at the front and a cover 11 pivoted at the back. The height of tray 10 and cover 11 can be such that each can partially receive a cartridge (i.e., the cartridge height is greater than the height of tray 10; furthermore, cover 11 is of a height sufficient to allow the upper portion of the cartridge not contained within tray 10 to reside within cover 11 when the cartridge receiver is in an operating position). The height of tray 10 can also be such that its height is greater than the cartridge height, thereby allowing tray 10 to completely receive the cartridge. Both tray 10 and cover 11 are pivotally coupled to the frame of the tape unit. Tray 10 is also pivotally coupled to cover 11 by pivot pins 19 which ride in mating slots 38. The pivot pins 19 can be located in either tray 10 or cover 11.

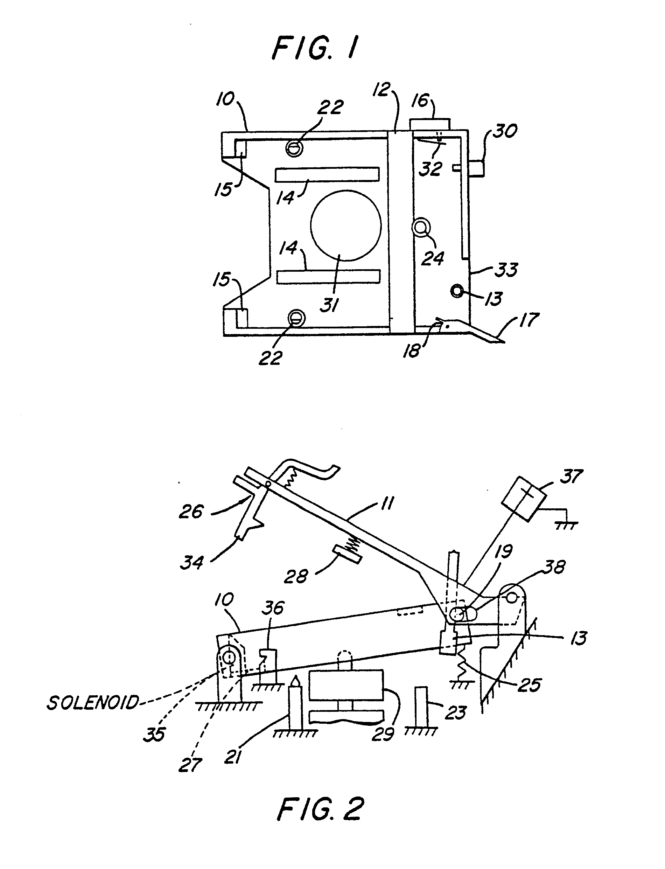

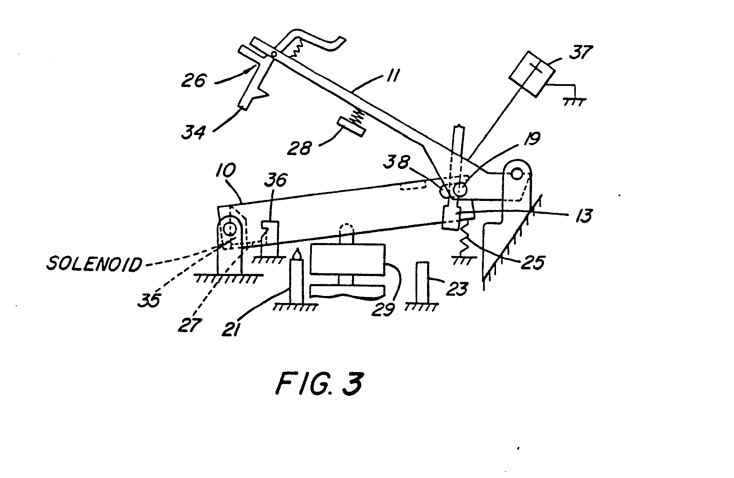

Mating slots 38 for pivot pins 19 are located in the tray if pivot pins 19 are located in the cover and vice versa. This arrangement of pivots is such that when opening and closing cover 11, tray 10 is raised and lowered. Fig. 2 shows pivot pins 19 located in tray 10 and slots 38 located in cover 11. Fig. 3 shows pivot pins 19 located in cover 11 and slots 38 located in tray 10.

The dual pivot arrangement accompanied by intermediate pivot pins 19 limits the vertical space required to receive a cartridge. This requirement for a minimum amount of vertical space in which to load and unload a cartridge is especially important when a cartridge receiver is needed in a tape unit that seeks to minimize size and operating space requirements.

Tray 10 also has molded guide rails 14 which prevent the leading edge of the cartridge from encountering drive 29 when a cartridge is loaded into tray 10. As a cartridge is placed in tray 10 the cartridge is guided under bridge 12 so as to properly align the cartridge leader block with threading pin 13. As the cartridge is urged into tray 10, the cartridge also goes over camming ramps 15 located at the front of the tray. Once the cartridge is positioned in the tray spring loaded flag 32 which is mounted to tray 10 is actuated. Flag 32 in turn actuates a cartridge present sensor 16 which is mounted to tray 10. A tray mounted file protect sensor 30 also interacts with the cartridge.

A ramp 17 and a step 18 are located at the back of tray 10. Ramp 17 and step 18 act to guide the leader block back into its proper position in the cartridge when the tape is rewound through the leader block slot 33 in tray 10. Step 18, bridge 12 and camming ramps 15 interact with the cartridge geometry to prevent the cartridge from being incorrectly inserted into tray 10. An opening in the bottom of tray 10 also engages threading pin 13 to position and restrain threading pin 13 during cartridge loading.

When a cartridge is positioned in tray 10, cover 11 is manually closed, the cartridge is lowered onto alignment pins 21 and support pin 23 and threading pin 13 engages the leader block. Alignment pin slots 22 and support pin slot 24 in tray 10 allow alignment pins 21 and support pin 23 to protrude through tray 10 when tray 10 is lowered into operating position. Lowering of tray 10 disengages threading pin 13 from tray 10. Simultaneously the cartridge approaches drive 29 at an angle, thus assuring positive engagement of mating teeth present on the reel within the cartridge with corresponding mating teeth present on the top of drive 29. Alignment pins 21 have protrusions which engage recesses in the cartridge. These protrusions align the cartridge so that the reel is properly centered when engaged with drive 29 through a central aperture 31 in tray 10. Furthermore, alignment pins 21 and support pin 23 provide a positive stop to counteract the force required to latch the leader block in the cartridge. As tray 10 is lowered, a spring 25 is also compressed. In the operating position (i.e., when the cartridge within tray 10 is lowered onto drive 29 and cover 11 is closed) the bottom of tray 10 does not contact the cartridge due to the presence of guide rails 14. This assures proper seating of the cartridge on alignment pins 21 and support pin 23. Tray 10 drops lower than the cartridge since the cartridge rests on alignment pins 21 and support pin 23.

A latch 26 is coupled to cover 11 and cooperates with a catch 36 coupled to the frame. Latch 26 and catch 36 provide for proper closure of cover 11. A latch flag 34 is included on latch 26 to activate a latch sensor 27 which signals that the cartridge is ready for operation. Latch sensor 27 can be attached to the frame, tray 10 or catch 36.

When cover 11 is closed and latched, a spring loaded plunger 28 exerts a sufficient downward force on the cartridge to overcome the hub spring inside the cartridge. This assures proper seating of the cartridge on alignment pins 21 and support pin 23.

Upon issuance of the signal which indicates that the cartridge is ready for operation, tape is threaded into the tape machine. When the tape is rewound and the leader block returned to the cartridge a sensor on the thread mechanism signals and trips solenoid 35 which in turn activates a release link and disengages latch 26. Disengagement of latch 26 allows spring 25 to urge tray 10 upward with a sufficient force to uncouple the cartridge from drive 29 and open cover 11. An air dashpot 37 is also provided to soften the opening. Once the cover is open, the cartridge can be removed. No ejection mechanism is used with the cartridge receiver of the present invention.

**Claims**

1. A data cartridge holder, comprising a frame; a tray (10) having a front end and a back end, said tray being pivotally coupled to said frame at the front end of said tray and adapted to partially receive said cartridge; a spring means (25) disposed between said tray and said frame for yieldably urging said tray to pivot from an operating position to a receiving position; and means for latching said tray in an operating position, characterized by a cover (11) having a front end and a back end pivotally coupled to and overlying said tray, said cover being pivotally coupled to said frame at the back end of said cover; a pair of transversely spaced apart pivot pins (19 in Fig. 3) provided on said cover (11) and located between the front end and back end of said cover (10); a pair of transversely spaced apart slots (38 in Fig. 3) disposed in said tray for receiving said pivot pins; and a means (26) for latching said cover coupled to said tray in an operating position; whereby in a limited amount of vertical space said tray and said cover are pivoted upwardly to be spaced apart in a receiving position for accepting a cartridge and pivoted downwardly to be abutted together in an operating position for enclosing a received cartridge.

2. A data cartridge holder, comprising a frame; a tray (10) having a front end and a back end, said tray being pivotally coupled to said frame at the front end of said tray and adapted to partially receive said cartridge; a spring means (25) disposed between said tray and said frame for yieldably urging said tray to pivot from an operating position to a receiving position; and means for latching said tray in an operating position; characterized by a cover (11) having a front end and a back end pivotally coupled to and overlying said tray, said cover being pivotally coupled to said frame at the back end of said cover;

a pair of transversely spaced apart pivot pins (19 in Fig. 2) provided on said tray (10) and located between the front end and back end of said tray;

a pair of transversely spaced apart slots (38 in Fig. 2) disposed in said cover (11) for receiving said pivot pins;

a means (26) for latching said cover coupled to said tray in an operating position;

whereby in a limited amount of vertical space said tray and said cover are pivoted upwardly to be spaced apart in a receiving position for accepting a cartridge and pivoted downwardly to be abutted together in an operating position for enclosing a received cartridge.

3. A holder according to claim 1 or 2, wherein said tray having a central aperture (31) for receiving a drive member (29) which operatively engages a reel contained within a received cartridge when said tray is pivoted into an operating position.

4. A holder according to claim 1, 2, or 3, further including:

guide rails (14) within said tray for supporting a portion of a received cartridge and keeping said cartridge from contacting said drive member.

5. A holder according to claim 1, 2, 3 or 4, further including:

an orientation means (12, 14, 15) integrally formed within said tray for ensuring proper cartridge orientation during insertion of the cartridge into said tray.

6. A holder according to claim 1, 2, 3, 4 or 5 further including:

a means (28) for holding said cover against said tray and said cartridge against said drive means when said tray is in an operating position.

7. A holder according to claim 1, 2, 3, 4, 5 or 6, further including:

pins (21, 23) attached to said frame for properly aligning and supporting a cartridge; and

pin slots (22, 24) in said tray for receiving said pins when said tray is in an operating position.

8. A holder according to any of the claims 1 to 7 further including:

a cartridge present sensor means (16) coupled to said tray for sensing when a cartridge is properly positioned within said tray.

9. A holder according to any of the claims 1 to 8 further including:

a file protect sensor means (30) coupled to said tray for sensing a file protect condition.

10. A holder according to any of the claims 1 to 9 further including:

a latch sensor means (27) for indicating when said tray is held in an operating position.

11. A holder according to any of the claims 1 to 10 further including:

a means (17, 18) coupled to said tray for guiding a leader block back into the cartridge when the tape is rewound; and

a leader block slot (33) in said tray for allowing tape to move in and out of said tray.

12. A holder according to any of the claims 1 to 11 further including:

a means (35) for disengaging said latch means.

13. A holder according to any of the claims 1 to 12 further including:

a threading pin (13) coupled to said tray for engaging a cartridge leader block;

a pair of camming ramps (15), a step and a bridge (12) coupled to said tray for ensuring proper cartridge orientation during insertion of said cartridge into said tray.

**Patentansprüche**

1. Datenkassettenhalter mit einem Rahmen;

einer Schale (10) mit einem vorderen und einem rückwärtigen Ende, wobei die Schale schwenkbar mit dem Rahmen an ihrem Vorderende gekoppelt ist und für eine teilweise Aufnahme der Kassette eingerichtet ist;

zwischen der Schale und dem Rahmen angeordneten Federmitteln (25), zur nachgiebigen Belastung der Schale für ein Schwenken aus einer Arbeitsstellung in eine Aufnahmestellung; und

Mitteln zur Verriegelung der Schale in einer Arbeitsstellung,

gekennzeichnet durch

eine Abdeckung (11) mit einem vorderen und einem rückwärtigen Ende, welche schwenkbar mit der Schale gekoppelt ist und über dieser liegt, wobei die Abdeckung mit dem Rahmen an ihrem rückwärtigen Ende schwenkbar gekoppelt ist;

ein Paar von in Querrichtung im Abstand liegenden Schwenkzapfen (19 in Fig. 3), welche auf der Abdeckung (11) vorgesehen sind und zwischen dem vorderen und dem rückwärtigen Ende der Abdeckung (10) liegen;

ein Paar von in Querrichtung im Abstand liegenden Schlitzen (38 in Fig. 3), die in der Schale zur Aufnahme der Schwenkzapfen angeordnet sind; und

Mittel (26) zur Verriegelung der mit der Schale gekoppelten Abdeckung in einer Arbeitsstellung;

wodurch in einem begrenzten vertikalen Raum die Schale und die Abdeckung für ein In-Abstand-Bringen in eine Aufnahmestellung zur Annahme einer Kassette nach oben und gegeneinander in eine Arbeitsstellung zum Einschließen einer aufgenommenen Kassette nach unten geschwenkt werden.

2. Datenkassettenhalter mit einem Rahmen;

einer Schale (10) mit einem vorderen und einem rückwärtigen Ende, wobei die Schale schwenkbar mit dem Rahmen an ihrem Vorderende gekoppelt ist und für eine teilweise Aufnahme der Kassette eingerichtet ist;

zwischen der Schale und dem Rahmen angeordneten Federmitteln (25), zur nachgiebigen Belastung der Schale für ein Schwenken aus einer Arbeitsstellung in eine Aufnahmestellung; und

Mitteln zur Verriegelung der Schale in einer Arbeitsstellung,

gekennzeichnet durch

eine Abdeckung (11) mit einem vorderen und einem rückwärtigen Ende, welche schwenkbar mit der Schale gekoppelt ist und über dieser liegt, wobei die Abdeckung mit dem Rahmen an ihrem rückwärtigen Ende schwenkbar gekoppelt ist;

ein Paar von in Querrichtung im Abstand liegenden Schwenkzapfen (19 in Fig. 1), die auf der Schale (10) vorgesehen und zwischen dem vorderen und dem rückwärtigen Ende der Schale liegen;

ein Paar von in Querrichtung im Abstand liegenden Schlitzen (38 in Fig. 2), die in der Abdeckung (11) zur Aufnahme der Schwenkzapfen angeordnet sind;

und Mittel (26) zur Verriegelung der mit der Schale gekoppelten Abdeckung in einer Arbeitsstellung;

wodurch in einem begrenzten vertikalen Raum die Schale und die Abdeckung für ein In-Abstand-Bringen in eine Aufnahmestellung zur Annahme einer Kassette nach oben und gegeneinander in eine Arbeitsstellung zum Einschließen einer aufgenommenen Kassette nach unten geschwenkt werden.

3. Halter nach Anspruch 1 oder 2, bei welchem die Schale eine zentrale Öffnung (31) zur Aufnahme eines Antriebselements (29) aufweist, welches wirkend eine in der aufgenommenen Kassette enthaltene Spule erfaßt, wenn die Schale in eine Arbeitsstellung geschwenkt wird.

4. Halter nach Anspruch 1, 2 oder 3, welcher ferner

Führungsschienen (14) innerhalb der Schale zur Unterstützung eines Teils einer aufgenommenen Kassette und der Verhinderung, daß die Kassette das Antriebselement berührt, aufweist.

5. Halter nach Anspruch 1, 2, 3 oder 4, welcher ferner

einstückig mit der Schale ausgebildete Ausrichtungsmittel (12, 14, 15) zur Gewährleistung einer richtigen Kassettenausrichtung während des Einsetzens der Kassette in die Schale aufweist.

6. Halter nach Anspruch 1, 2, 3, 4 oder 5, welcher ferner

Mittel (28) zum Halten der Abdeckung gegen die Schale und der Kassette gegen die Antriebsmittel, wenn die Schale in Arbeitsstellung ist, aufweist.

7. Halter nach Anspruch 1, 2, 3, 4, 5 oder 6, welcher ferner

am Rahmen angebrachte Stifte (21, 23) für ein korrektes Ausrichten und Haltern der Kasette; und in der Schale ausgebildete Stiftschlitze (22, 24) zur Aufnahme der Stifte, wenn die Schale in Arbeitsstellung ist, aufweist.

8. Halter nach irgendeinem der Ansprüche 1 bis 7, welcher ferner

mit der Schale gekoppelte Kassettenanwesenheitssensormittel (16) zum Abfühlen, wenn eine Kassette richtig in der Schale angeordnet ist, aufweist.

9. Halter nach irgendeinem der Ansprüche 1 bis 8, welcher ferner

mit der Schale gekoppelte Schreibschutzsensormittel (30) zur Abfühlung einer Schreibschutzbedingung aufweist.

10. Halter nach irgendeinem der Ansprüche 1 bis 9, welcher ferner

Verriegelungssensormittel (27) für eine Anzeige, wenn die Schale in einer Arbeitsstellung gehalten wird, aufweist.

11. Halter nach irgendeinem der Ansprüche 1 bis 10, welcher ferner

mit der Schale gekoppelte Mittel (17, 18) zur Rückführung eines Einführungsblocks zurück in die Kassette, wenn das Band zurückgespult wird, und

einen Einführungsblockschlitz (33) in der Schale, damit sich das Band in und aus der Schale bewegen kann, aufweist.

12. Halter nach irgendeinem der Ansprüche 1 bis 11, welcher ferner

Mittel (35) zur Lösung der Verriegelungsmittel aufweist.

13. Halter nach irgendeinem der Ansprüche 1 bis 12, welcher ferner

einen mit der Schale gekoppelten Fädelungsstift (13) für ein Erfassen eines Kassetteneinführungsblockes, und

ein Paar von Auflauframpen (15), eine Stufe und einen Steg (12), welche mit der Schale gekoppelt sind, zur Gewährleistung einer richtigen Kassettenausrichtung während des Einsetzens der Kassette in die Schale aufweist.

## Revendications

1. Supporte de cassette de données comprenant un bâti, un réceptacle (10) ayant une extrémité avant et une extrémité arrière, ledit réceptacle étant articulé sur le bâti à son extrémité avant et adapté pour recevoir partiellement ladite cassette, un moyen élastique (25) disposé entre ledit réceptacle et ledit bâti pour solliciter élastiquement le réceptacle à pivoter depuis une position active jusqu'à une position réceptrice; et des moyens pour verrouiller ledit réceptacle en position active, caractérisé en ce qu'il comprend un couvercle (11) ayant une extrémité avant et une extrémité arrière, articulé et recouvrant ledit réceptacle, ledit couvercle étant articulé sur ledit bâti à extrémité arrière du couvercle, deux pivots d'articulation espacés transversalement (19), prévus sur le couvercle (11) et situés entre les extrémités avant et arrière dudit couvercle, deux fentes (38) espacées transversalement, disposées dans ledit réceptacle pour recevoir lesdits pivots d'articulation et un organe (26) pour verrouiller ledit couvercle couplé audit réceptacle en position active, grâce à quoi ledit réceptacle et ledit couvercle sont pivotés vers le haut dans un mouvement limité d'espace vertical de façon à être écartés l'un de l'autre dans une position réceptrice pour accepter une cassette, et pivotent vers le bas pour venir en butée ensemble en position active pour enfermer une cassette reçue.

2. Support de cassette de données comprenant un bâti, un réceptacle (10) ayant une extrémité avant et une extrémité arrière, ledit réceptacle étant articulé sur le bâti à son extrémité avant et adapté pour recevoir partiellement ladite cassette, un moyen élastique (25) disposé entre ledit réceptacle et ledit bâti pour solliciter élastiquement ledit réceptacle à pivoter à partir d'une position active dans une position réceptrice, et des moyens pour verrouiller ledit réceptacle en position active, caractérisé en ce qu'il comprend un couvercle (11) ayant une extrémité avant et une extrémité arrière et articulé sur ledit réceptacle et le recouvrant, ledit couvercle étant articulé sur ledit bâti à l'extrémité arrière du couvercle, deux pivots d'articulation espacés transversalement (19), prévus sur le réceptacle (10) et situés entre les extrémités avant et arrière dudit réceptacle, deux fentes espacées transversalement (38) disposées dans ledit couvercle (11) pour recevoir lesdits pivots d'articulation, un organe (26) pour verrouiller ledit couvercle couplé au réceptacle en position active, grâce à quoi ledit réceptacle et ledit couvercle sont pivotés vers le haut dans un mouvement limité dans l'espace vertical de façon à être espaces l'un de l'autre en position de réception pour accepter une cassette, et pivotés vers le bas pour être amenés en butée ensemble en position active pour enfermer une cassette reçue.

3. Support suivant la revendication 1 ou 2, caractérisé en ce que ledit réceptacle comporte une ouverture centrale (31) pour recevoir un organe (29) d'entrainement qui reçoit en liaison d'entrainement un rouleau contenu à l'intérieur d'une cassette reçue lorsque ledit réceptacle est pivoté dans sa position active.

4. Support suivant la revendication 1, 2 ou 3, caractérisé en ce qu'il comprend des rails de guidage (14) à l'intérieur dudit réceptacle pour soutenir une partie d'une cassette reçue et empêcher cette cassette d'entrer en contact avec ledit organe d'entrainement.

5. Support suivant la revendication 1, 2, 3 ou 4, caractérisé en ce qu'il comprend des organes d'orientation (12, 14, 15) venus de matière avec ledit réceptacle pour assurer une orientation appropriée de la cassette lors de l'introduction de celle-ci dans le réceptacle.

6. Support suivant la revendication 1, 2, 3, 4 ou 5, caractérisé en ce qu'il comprend des moyens (28) pour maintenir ledit couvercle contre ledit réceptacle et ladite cassette contre ledit dispositif d'entrainement lorsque le réceptacle se trouve en position active.

7. Support suivant les revendications 1, 2, 3, 4, 5 ou 6, caractérisé en ce qu'il comprend des doigts (21, 23) fixés sur ledit bâti pour aligner et soutenir une cassette de façon appropriée, et des fentes (22, 24) dans ledit réceptacle pour recevoir lesdits doigts lorsque ledit réceptacle est en position active.

8. Support suivant l'une quelconque des revendications 1 à 7, caractérisé en ce qu'il comprend un capteur (16) de présence de cassette couplé audit réceptacle pour détecter lorsqu'une cassette est positionnée convenablement à l'intérieur dudit réceptacle.

9. Support suivant l'une quelconque des revendications 1 à 8, caractérisé en ce qu'il comprend un capteur (30) de protection de défilement couplé audit réceptacle pour détecter un état de protection de défilement.

10. Support suivant l'une quelconque des revendications 1 à 9, caractérisé en ce qu'il comprend un capteur (27) de verrouillage pour indiquer lorsque ledit réceptacle est maintenu en position active.

11. Support suivant l'une quelconque des revendications 1 à 10, caractérisé en ce qu'il comprend des moyens (17, 18) couplés audit réceptacle pour guider un bloc de tête lors du retour dans la cassette lorsque la bande est ré-enroulée, et une fente (33) de bloc de tête dans ledit réceptacle pour permettre au ruban de rentrer et de sortir de ce dernier.

12. Support suivant l'une quelconque des revendications 1 à 11, caractérisé en ce qu'il comprend des moyens (35) pour dégager ledit verrouillage.

13. Support suivant l'une quelconque des revendications 1 à 12, caractérisé en ce qu'il comprend un doigt (13) de mise en place couplé audit réceptacle pour venir en contact avec un bloc de tête de cassette, deux rampes de came (15), un épaulement et un pont (12) couplés audit réceptacle pour assurer une orientation appropriée de la cassette lors de l'insertion de celle-ci dans ledit réceptacle.

# FIG. 1

# FIG. 2

FIG. 3